**Europäisches Patentamt**

**European Patent Office**

**Office européen des brevets**

(11) Veröffentlichungsnummer: **0 337 073**

**A2**

(12) # EUROPÄISCHE PATENTANMELDUNG

(21) Anmeldenummer: **89102474.7**

(22) Anmeldetag: **23.03.89**

(51) Int. Cl.4: **B01D 53/34 , F23J 15/00**

(30) Priorität: **07.04.88 DE 3811636**

(43) Veröffentlichungstag der Anmeldung:
**18.10.89 Patentblatt 89/42**

(84) Benannte Vertragsstaaten:
**AT BE CH DE FR GB GR IT LI NL SE**

(71) Anmelder: **Deutsche Babcock Anlagen
Aktiengesellschaft
Duisburger Strasse 375
D-4200 Oberhausen 1(DE)**

(72) Erfinder: **Voje, Heinz-Helmut
Buchenstrasse 27
D-4224 Hünxe 2(DE)**

(74) Vertreter: **Planker, Karl-Josef, Dipl.-Phys.
c/o Deutsche Babcock Anlagen AG
Parkstrasse 29 Postfach 4 + 6
D-4150 Krefeld 11(DE)**

(54) **Verfahren zum Entfernen von Stickoxid aus einem Rauchgasstrom und Feuerung mit Einrichtungen zur Durchführung des Verfahrens.**

(57) Bei der selektiven nicht katalytischen Entstickung wird ein Rauchgasstrom in einer homogenen Gasphasenreaktion mit einem Reagenz, z.B. Ammoniak, in Kontakt gebracht. Es ist wichtig, daß die Kontaktzone sich genau mit der Zone deckt, in der das Rauchgas einen engen, üblicherweise als "Temperaturfenster" bezeichneten Bereich in der Nähe von 1000 °C durchläuft. Vor allem bei der Nachrüstung bestehender Feuerungen mit Entstickungseinrichtungen ist es oft schwierig, das Reagenz genau an der richtigen Stelle mit dem Rauchgas in Kontakt zu bringen.

Die Reagenzlösung wird in Form von Tropfen variabler Größe mit Trägergasstrahlen in den Rauchgasstrom eingeblasen. Die Tropfen werden in der Weise erzeugt, daß eine wäßrige Reagenzlösung an einer Kante mit einem Trägergasstrahl zusammengeführt wird. Bei großen Tropfen liegt die Stelle, an der die Verdampfung des Reagenz stattfindet, weiter stromabwärts als bei kleinen Tropfen. Daher läßt sich durch Änderung der Tropfen größe die Zone, in der das Reagenz in gasförmigem Zustand mit dem Rauchgas gemischt wird, verschieben. Die Tropfengröße wird durch Änderung der Wegstrecke variiert, die die Flüssigkeit in dem Trägergasstrahl zurücklegt, bevor dieser aus der Düsenmündung austritt. Hierzu dient eine Düse (1) mit koaxialem, in Achsrichtung verschieblichem Innenrohr (12).

Nichtkatalytische Entstickung der Rauchgase von Großfeuerungsanlagen.

Fig 1

# Verfahren zum Entfernen von Stickoxid aus einem Rauchgasstrom und Feuerung mit Einrichtungen zur Durchführung des Verfahrens

Die Erfindung betrifft ein Verfahren zum Entfernen von Stickoxid aus einem Rauchgasstrom gemäß dem Oberbegriff des Patentanspruchs 1. Außerdem betrifft die Erfindung eine Feuerungsanlage mit Einrichtungen zur Durchführung des Verfahrens.

Die DE-PS 24 11 672 beschreibt ein Verfahren zum Entfernen von Stickstoffmonoxid aus Verbrennungsabgasen durch selektive nicht katalystische Reduktion. Bei diesem Verfahren wird das Verbrennungsabgas in einer homogenen Gasphasenreaktion mit Ammoniak oder einer Ammoniakvorstufe in Kontakt gebracht. Das Reagenz kann auch in Wasser gelöst sein. Die Lösung bildet beim Verdampfen, das als getrennte Stufe oder durch Injektion in das heiße Abgas vorgenommen wird, Ammoniak. Wichtig ist bei diesem Verfahren, daß die Temperatur des Verbrennungsabgases während des Kontaktes mit dem gasförmigen Ammoniak innerhalb eines schmalen Temperaturintervalls um 1000 °C liegt, dessen Grenzen sich je nach der Anwesenheit bestimmter Stoffe verschieben können. Für dieses Temperaturintervall hat sich in der Praxis die Bezeichnung "Temperaturfenster" eingebürgert, die auch nachfolgend verwendet wird.

Die Grenzen des Temperaturfensters sind äußerst kritisch. Schon bei einer geringen Unterschreitung der Untergrenze erweist sich die Ammoniakzugabe als wirkungslos. Eine geringe Überschreitung der Obergrenze kann sogar dazu führen, daß anstelle einer Verminderung eine Erhöhung der Stickoxidkonzentration eintritt. Die Stelle, an der das Ammoniak eingesprüht wird, muß daher sehr sorgfältig gewählt werden, so daß der Kontakt an der Stelle stattfindet, an der das Rauchgas gerade das Temperaturfenster durchläuft. Die Stelle kann sich bei Lastschwankungen der Feuerung verschieben.

In den meisten Fällen ist es aber mit den größten Schwierigkeiten verbunden, das Reagenz genau an der Stelle mit dem Abgas in Kontakt zu bringen, an der dieses das Temperaturfenster durchläuft. Je nach der Art der Feuerung und der Geometrie des Rauchgaskanals können die Isothermen komplizierte Flächen sein. Schon die Messung der Temperaturverteilung ist nicht immer eine einfache Aufgabe. Vielfach ist gerade an den Stellen, an denen das Rauchgas das Temperaturfenster durchläuft, der Einbau von Düsen aus konstruktiven Gründen besonders schwierig. Es kommt hinzu, daß die Isothermen bei wechselnder Last der Feuerung ihre Form und Lage verändern.

Gemäß SPECIAL / NO$_x$-Minderung in Rauchgasen, VDI-Verlag Oktober 87, Seiten R 15 - R 22, insbesondere Seiten R 20 -R 21, sind zur Durchführung des sogenannten SNCR-Verfahrens in verschiedenen Höhen mehrere Düsenebenen angebracht, die entsprechend dem jeweiligen Lastzustand und der daraus resultierenden Temperaturverteilung ein- und ausgeschaltet werden. Das Ammoniak wird mit Luft oder Dampf vermischt und zur Erreichung einer hohen Eindringtiefe über Nah- und Fernbereichsdüsen in den Brennraum eingedüst, um eine gute und schnelle Durchmischung des Ammoniaks mit dem Rauchgas zu erreichen.

Um betriebsbedingte Temperaturverlagerungen aufzufangen, sind bei einem anderen Kessel gemäß SPECIAL / NO$_x$-Minderung in Rauchgasen, VDI-Verlag Oktober 87, Seiten R 44 - R 56, insbesondere Seiten R 53 - R 56, insgesamt vier Injektorzonen vorgesehen, von denen je zwei in der Kesselvorderwand und in der Kesseldecke liegen. Das Reagenz wird mit Dampf als Treibmittel eingeblasen.

Die nicht vorveröffentlichte deutsche Patentanmeldung P 37 22 523.5-43 schlägt für einen senkrechten Feuerraumzug einen vertikal verschieblichen Lanzenstock vor, mit dem ein Düsenträger verbunden ist. Mit dieser Anordnung ist eine nachträgliche Positionskorrektur und eine Anpassung an verschiedene Teillastfälle möglich. Sie setzt aber eine relativ einfache Kesselgeometrie voraus und stellt extreme Anforderungen an die Werkstoffe und das Kühlsystem.

Die ebenfalls noch nicht veröffentlichte deutsche Patentanmeldung P 38 00 730.4 schlägt ein Verfahren zum Einmischen von Ammoniak in einen Rauchgasstrom vor, bei dem eine wäßrige Ammoniaklösung in einen Trägergasstrom eingesprüht und darin verdampft wird; der Trägergasstrom wird anschließend dem Rauchgasstrom zugemischt.

Durch die WO-A1-87/02025, von der der Oberbegriff des Patentanspruchs 1 ausgeht, ist es bekannt, eine wäßrige Harnstofflösung bei einer Temperatur über etwa 1100 °C (2000 °F) mit Düsen in Form von Tropfen in einen Rauchgas strom einzusprühen, wobei die Konzentration der Lösung und die Tropfengröße so gewählt werden, daß eine Entstickung bewirkt wird. Die Tropfengröße soll zwischen 150 und 10.000 $\mu$ liegen und mit zunehmender Temperatur vergrößert werden. Die Tropfengröße wird durch Änderung des Druckes variiert, mit dem die Lösung den Düsen zugeführt wird. Mit dem Druck ändert sich aber auch der Impuls und die Eindringtiefe. Die Eindringtiefe hängt außerdem von dem Reibungswiderstand ab, der der Bewegung der Tropfen im Rauchgasstrom entgegenwirkt. Da der Reibungswiderstand eine Funktion der Tropfengröße ist, ist auch die Eindringtiefe eine Funktion der Tropfengröße. Daher ist mit jeder Änderung der Tropfengröße eine Änderung der Eindringtiefe und somit eine Änderung der Durchmischungsgüte verbunden. Es besteht ferner eine Abhängigkeit zwischen dem Druck, mit dem die Harnstofflösung zerstäubt wird, und der Durchflußmenge. Wenn sich bei einer Laständerung des Kessels die Rauchgasmenge ändert, dann ist es nur schwer möglich, die Menge der Harnstofflösung dem veränderten Bedarf anzupassen und dabei gleichzeitig die Durchmischungsgüte konstant zu halten und die Tropfengröße in dem gewünschten Sinne zu beeinflussen.

Der Erfindung liegt die Aufgabe zugrunde, ein Verfahren der im Oberbegriff des Anspruchs 1 angegebenen Gattung zu schaffen, bei dem die Durchmischungsgüte von Änderungen der Tropfengröße und der Durchflußmenge der Reagenzlösung praktisch unbeeinflußt bleibt.

Eine zweite Aufgabe besteht darin, bei Feuerungsanlagen gemäß den Oberbegriffen der Ansprüche 5 bis 9 die Düsen so auszubilden, daß die Bildung von Tropfen vorbestimmter, veränderlicher Größe innerhalb der Düsen mit einfachen Mittel ermöglicht wird.

Die erstgenannte Aufgabe wird durch das im Kennzeichen des Anspruchs 1 angegebene Merkmal gelöst.

Die Erfindung basiert auf der Überlegung, daß das Verhalten der Trägergasstrahlen im Rauchgasstrom von der Anwesenheit der mitgeführten Tropfen unberührt bleibt, unabhängig - im Rahmen des praktisch in Betracht kommenden Bereichs - von deren Größe und Menge. Das Verhalten von Trägergasstrahlen ist rechnerisch und technisch soweit beherrschbar, daß eine gleichmäßige Einmischung des Trägergases in den Rauchgasstrom gewährleistet werden kann. Mit dem Trägergas verteilen sich auch die Tropfen gleichmäßig im Rauchgasstrom.

Das Merkmal des Anspruchs 2 ermöglicht die Einblasung von der Kesselwand her, ohne daß in dem Rauchgaskanal Einbauten erforderlich sind.

Die Erzeugung der Tropfen gemäß Anspruch 3 oder 4 ist in Verbindung mit dem erfindungsgemäßen Verfahren nicht nur sehr einfach, sondern hat den besonderen Vorteil, daß die Tropfengröße praktisch unabhängig ist von der Menge der pro Zeiteinheit durchfließenden Menge an Reagenzlösung. Die Menge des zugeführten Reagenz läßt sich daher problemlos wechselnden Rauchgasmengen anpassen, ohne daß damit zwangsläufig eine Änderung der Tropfengröße und - dadurch bedingt - eine Verlagerung der Kontaktzone verbunden ist.

Die Ansprüche 5 und 6 geben zwei alternative Lösungen der zweiten Aufgabe an.

Bei der Vorrichtung gemäß Anspruch 7 sind die Merkmale der Ansprüche 5 und 6 kombiniert.

Dadurch wird der Bereich, in dem die Tropfengröße variiert werden kann, erweitert.

Das Merkmal des Anspruchs 8 trägt zur Erzeugung einer gleichmäßigen Tropfengröße bei.

Eine weitere Lösung der an zweiter Stelle genannten Aufgabe ist in Anspruch 9 angegeben.

Die Zeichnung dient zur Erläuterung der Erfindung anhand von verschiedenen Einrichtungen zur Durchführung des erfindungsgemäßen Verfahrens.

Figur 1 zeigt eine Düse im Längsschnitt

Figur 2 zeigt im vergrößertem Maßstab eine zusätzliche Einzelheit einer Düse im Querschnitt

Figur 3 zeigt schematisch einen Schnitt durch einen waagerechten Rauchgaskanal mit Düsen und zugehörigen Leitungssystemen

Figur 4 zeigt für ein anderes Ausführungsbeispiel eine Gruppe von Düsen mit den zugehörigen Leitungssystemen.

Figur 5 zeigt eine Einzelheit einer anderen Düse im Längsschnitt.

Die pistolenähnlich geformte Düse 1 besteht im wesentlichen aus einem zylindrischen Teil 2 und einem daran anschließenden Düsenkrümmer 3. Der zylindrische Teil 2 sitzt mit Spiel in einem rohrförmigen Kanal 4 der Wand 5 eines Rauchgaskanals. Er besteht im wesentlichen aus einem Mantelrohr 6 und einem Düsenrohr 7. Das Mantelrohr 6 ragt in den Rauchgaskanal hinein und weist an seinem freien Ende eine Stirnplatte 8 auf, die mit einer zentralen, kreisrunden Öffnung versehen ist. Das Düsenrohr 7 hat einen Durchmesser von z.B. 40 bis 50 mm. An seinem freien Ende ist es mit einem bis an die Stirnplatte 8 heranreichenden konisch verengten Mundstück 9 versehen. Der Durchmesser der Düsenmündung ist etwa halb so groß wie der lichte Durchmesser des Düsenrohrs 7 und etwas kleiner als der Öffnungsdurchmesser der Stirnplatte 8. Die Länge des Mundstücks 9 entspricht etwa dem 1,5- bis 2-fachen lichten Durchmesser des Düsenrohrs 7. Der Zwischenraum zwischen Mundstück 9 und Mantelrohr 6 ist mit einem wärmedämmenden Material 10 gefüllt. Die Düse 1 ist mit handelsüblichen Befestigungselementen 11 an der Verkleidung der Kesselwand 5 befestigt. Mit diesen Befestigungselementen ist auch der Düsenkrümmer 3 an den zylindrischen Teil 2 angeschlossen.

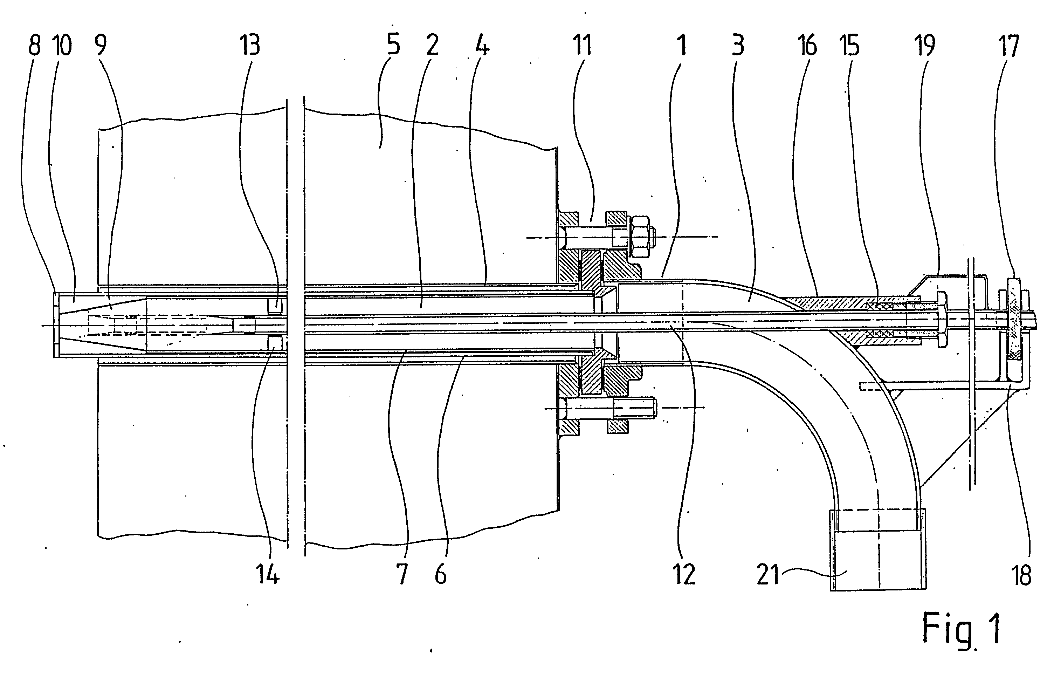

Koaxial in dem Düsenrohr 7 sitzt ein Innenrohr 12, dessen Außendurchmesser zum lichten Durchmesser des Düsenrohrs 7 etwa im Verhältnis 1 : 3 steht. In der Nähe des Ansatzes des Mundstückes 9 ist im Innern des Düsenrohrs 7 mit radialen Streben 13, die an der Wand des Düsenrohrs 7 befestigt sind, ein Führungsring 14 angebracht, der das Innenrohr 12 mit geringem Spiel umschließt. Das Innenrohr 12 ist in Achsrichtung zwischen zwei Grenzstellungen verschieblich. In der vorgeschobenen Grenzstellung, die in Figur 1 mit gestrichelten Linien dargestellt ist, ragt es mit seinem freien Ende in das Mundstück 9 bis in die Nähe der Düsenmündung hinein. In der anderen, mit durchgezogenen Linien gezeichneten, zurückgezogenen Grenzstellung endet das Innenrohr 12 mit Abstand von dem Ansatz des Mundstücks 9. Der Abstand zwischen den beiden Grenzstellungen entspricht etwa dem doppelten lichten Durchmesser des Düsenrohrs 7. Die Wandstärke des Innenrohrs 12 nimmt in der Nähe seines freien Endes keilartig ab, so daß die Wand an der Mündung in einer scharfen Schneide ausläuft. Durch die keilartige Abnahme der Wandstärke bedingt, ist der lichte Querschnitt des Innenrohrs 12 in Richtung auf die Mündungskante trichterartig erweitert.

Das Innenrohr 12 durchdringt die Wand des Düsenkrümmers 3. Der Durchlaß ist mit einer Stopfbuchsendichtung 15 abgedichtet, die in einer mit dem Düsenkrümmer 3 verschweißten Manschette 16 sitzt. In der Nähe seines nach außen ragenden Endes ist das Innenrohr 12 mit einem Gewinde versehen. Darauf sitzt eine drehbare Rändelmutter 17, die durch eine mit dem Düsenkrümmer 3 verschweißte Halterung 18 in axialer Richtung fixiert ist. An dem Innenrohr 12 ist ein mehrfach abgewinkelter Zeiger 19 befestigt, dessen Spitze sich unmittelbar über der Manschette 16 befindet. Diese ist mit einer Skala versehen, an der sich die Position des Innenrohres 12 ablesen läßt. An dem in Figur 1 nicht sichtbaren Ende des Innenrohrs 12 ist eine flexible Zuleitung für eine Reagenzlösung angeschlossen, die axial in das Innenrohr 12 einmündet. Der Anschluß ist so ausgebildet, daß das Innenrohr 12 gegen Verdrehung gesichert ist.

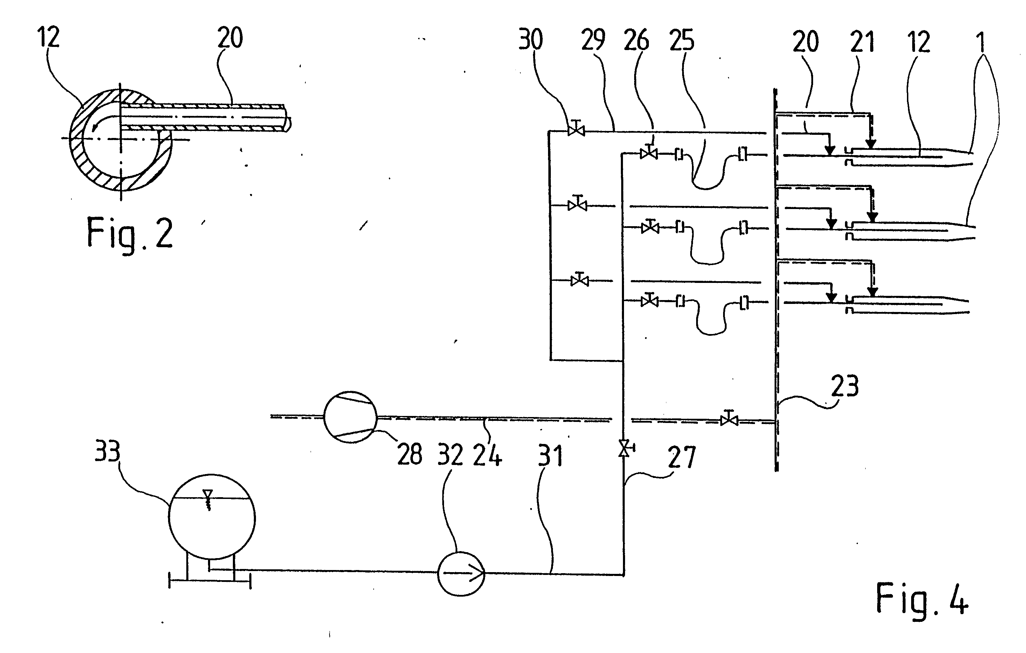

Bei einem bevorzugten Ausführungsbeispiel mündet, wie in Figur 2 veranschaulicht, ein Anschlußstutzen 20 für eine weitere Zuleitung tangential in das Innenrohr 12 ein. Die Einmündungsstelle liegt zweckmäßig zwischen der Rändelmutter 17 und der axial an eine Zuleitung angeschlossenen Rohrende.

Der Düsenkrümmer 3 ist an eine Zuleitung 21 für ein Trägergas, z.B. Dampf oder Luft, angeschlossen.

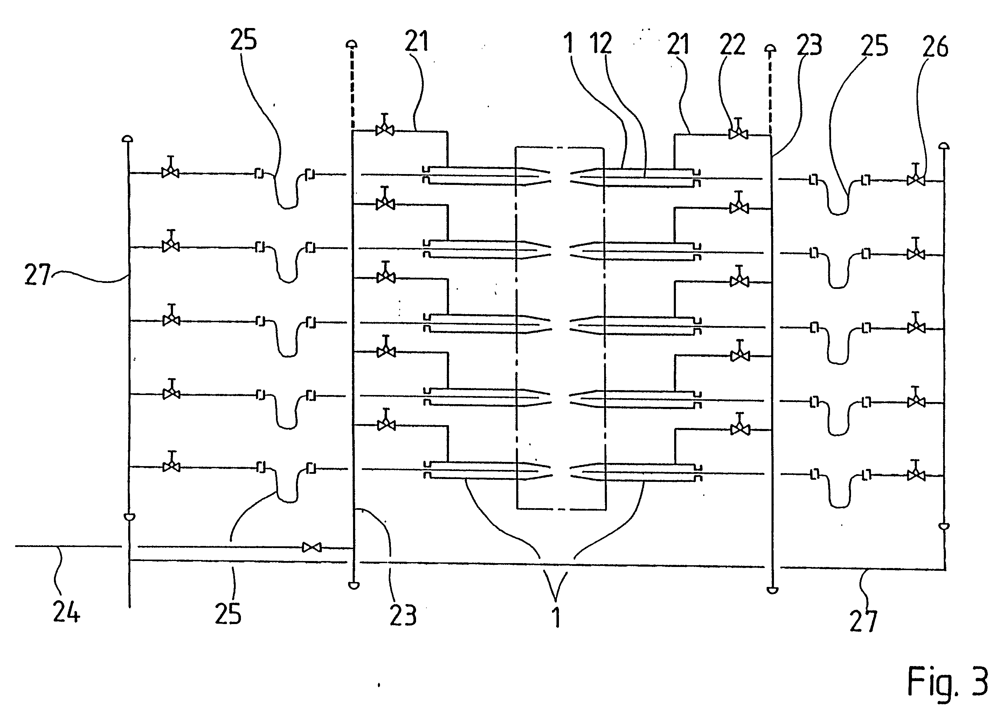

Gem. Figur 3 sind in zwei gegenüberliegenden Wänden eines in der Zeichnung nur angedeuteten waagerechten, rechteckigen Rauchgaskanals je fünf Düsen 1 angeordnet. Die Lage der Ebene, in der die Düsen angeordnet sind, richtet sich nach den bei verschiedenen Betriebszuständen der Feuerung ermittelten Temperaturverläufen längs des Rauchgasweges. Sie ist so festgelegt, daß das Rauchgas bei Betrieb mit schwacher Teillast das Temperaturfenster nur wenig stromabwärts der Düsenebene durchläuft. Bei Vollastbetrieb ist das Temperaturfenster weiter stromabwärts verschoben. Jede Düse 1 ist an eine Zuleitung 21 angeschlossen, die mit einem Ventil 22 ausgestattet ist. Die Zuleitungen 21 gehen von Verteilern 23 aus, die über Rohre 24 mit einem in Figur 3 nicht dargestellten Dampferzeuger verbunden sind.

Die Innenrohre 12 sind über axial einmündende Schläuche 25 und Dosierorgane 26 an Verteilerleitungen 27 angeschlossen, die mit einem in Figur 3 nicht dargestellten, mit Ammoniakwasser gefüllten Tank in Verbindung stehen.

Im Betrieb werden die Düsen 1 mit Dampf beaufschlagt, dessen Druck bei etwa 2 bis 3 bar und dessen Temperatur bei etwa 200 bis 350 °C liegt. Der Dampf strömt mit einer Geschwindigkeit, die der Schallgeschwindigkeit nahekommt, aus den Mundstücken 9 der Düsen 1 aus. Den Innenrohren 12 der Düsen 1 wird Ammoniakwasser in einer Menge zugeführt, die auf die im Rauchgas vorhandene Stickoxidmenge abgestimmt ist. Das zuströmende Ammoniakwasser, das nur ein Segment des lichten Innenrohrquerschnitts ausfüllt, kommt an der Mündung des Innenrohres 12 mit dem Dampfstrahl in Berührung und wird dadurch in Tropfen zerrissen. Die Tropfengröße hängt in guter Näherung allein von der Wegstrecke ab, die die Flüssigkeit in dem Dampfstrahl zurücklegt, bevor dieser aus der Düsenmündung austritt. Je größer die Wegstrecke, desto kleiner sind die Tropfen. Demgemäß fällt der Tropfendurchmesser um so kleiner aus, je weiter das Innenrohr 12 aus der in Figur 1 mit gestrichelten Linien gezeichneten vorgeschobenen Stellung in Richtung auf die zurückgezogene Stellung verschoben ist.

Wenn die Feuerung, aus der das Rauchgas kommt, zum Beispiel mit Schwachlast betrieben wird, dann bringt man das Innenrohr 12 in die zurückgezogene Stellung, so daß sehr kleine Tropfen erzeugt werden. Die Tropfen, die durch die Dampfstrahlen in den Rauchgasstrom hineingetragen und darin gleichmäßig verteilt werden, erwärmen sich schnell auf die Temperatur, bei der die Hauptmenge des Ammoniaks verdampft. Zu diesem Zeitpunkt sind die kleinen Tropfen durch den Rauchgasstrom nur wenig stromabwärts getrieben worden. Die Verdampfung des Ammoniaks findet also im kurzen Abstand von der Düsenebene statt.

Wird jedoch die Feuerung mit höherer Last betrieben, so bewirkt man durch Verschieben des Innenrohres 12 eine Vergrößerung des Tropfendurchmessers. Die großen Tropfen benötigen mehr Zeit für die Erwärmung und sind daher schon weiter abgetrieben, bevor die Verdampfung des Ammoniaks einsetzt. So läßt sich durch geeignete Positionierung des Innenrohres 12 erreichen, daß die Hauptmenge des Ammoniaks jeweils in dem Bereich verdampft, in dem das Rauchgas das Temperaturfenster durchläuft.

Auch bei Feuerungen, die mit konstanter Last betrieben werden, ist die Erfindung mit Vorteil anwendbar. Wenn sich z.B. beim nachträglichen Einbau einer Entstickungseinrichtung ergibt, daß das Temperaturfenster an einer Stelle des Rauchgaskanals liegt, die für den Einbau von Düsen schlecht geeignet ist, besteht aufgrund der Erfindung die Möglichkeit, die Düsen an einer besser geeigneten stromaufwärts gelegenen Stelle einzubauen und durch Vergrößerung des Tropfendurchmessers die Kontaktzone in den Bereich zu verschieben, in dem das Rauchgas das Temperaturfenster durchläuft.

Es ist auch möglich, die Kontaktzone nachträglich zu korrigieren, z.B. wenn sich im Betrieb zeigt, daß die Temperaturmessungen, die der Festlegung der Lage der Düsenebene zugrundelagen, nicht exakt waren. Wenn die Isothermen des Rauchgasstroms keine ebenen Flächen sind, läßt sich durch unterschiedliche Positionierung der Innenrohre 12 der einzelnen Düsen 1 die Kontaktzone dem deformierten Temperaturprofil annähern.

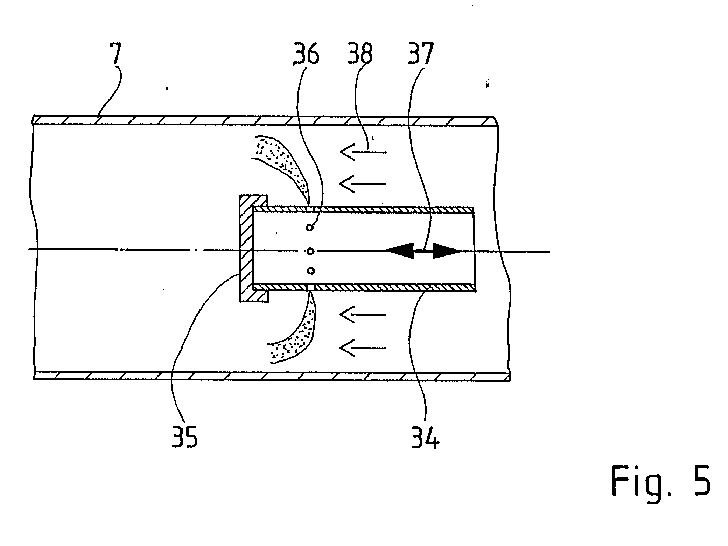

Bei dem in Figur 4 dargestellten Ausführungsbeispiel sind in einer nicht dargestellten Wand eines Rauchgaskanals drei Düsen 1 angeordnet. Sie sind über Zuleitungen 21, einen Verteiler 23 und eine Leitung 24 durch ein Gebläse 28 mit kalter Luft beaufschlagbar, die aus der Umgebung angesaugt wird. Die Innenrohre 12 sind einerseits über axial einmündende Schläuche 25, andererseits über flexible Leitungen 29, die an die tangential einmündenden Anschlußstutzen 20 angeschlossen sind, mit einer Verteilerleitung 27 verbunden, wobei sowohl die Anschlüsse der Schläuche 25 als auch die Anschlüsse der flexiblen Leitungen 29 mit Dosierventilen 26, 30 ausgestattet sind. Die Verteilerleitung 27 steht über eine Leitung 31 mit Pumpe 32 mit einem mit Ammoniakwasser gefüllten Tank 33 in Verbindung.

Bei diesem Auführungsbeispiel der Erfindung besteht die zusätzliche Möglichkeit, der Flüssigkeit in dem Innenrohr 12 eine tangentiale Geschwindigkeitskomponente mitzugeben, die sich durch Einstellung der Dosierorgane 26, 30 verändern läßt. Die tangentiale Geschwindigkeitskomponente bewirkt, daß die Flüssigkeit an der Wand des Innenrohres 12 einen rotierenden Film bildet. Eine Vergrößerung der tangentialen Komponente bewirkt eine Verkleinerung des Tropfendurchmessers.

Bei dem Ausführungsbeispiel gemäß Figur 5 ist das Innenrohr 34 an seinem freien Ende durch eine Scheibe 35 geschlossen. In kurzem Abstand vor der Scheibe 35 ist die Rohrwand mit einem Kranz von Bohrungen 36 versehen. Das Innenrohr 34 ist, wie durch den Doppelpfeil 37 symbolisiert, innerhalb des Düsenrohres 7 in Achsrichtung hin und her verschieblich. Die vorgeschobene Stellung und die zurückgezogene Stellung entsprechen den im Zusammenhang mit Figur 1 beschriebenen Grenzstellungen des Innenrohrs.

Die Reagenzlösung strömt aus den Bohrungen 36 in Form von radialen Strahlen aus. Diese werden von dem in Richtung der Pfeile 38 strömenden Trägergasstrahl - wie in Figur 5 angedeutet - in die axiale Richtung umgelenkt und dabei in Tropfen zerrissen. Die Tropfengröße ist in einem weiten Bereich nahezu unabhängig von der Geschwindigkeit der aus den Bohrungen 36 austretenden Flüssigkeitsstrahlen, d.h. vom Flüssigkeitsdurchsatz des Innenrohrs 34, vorausgesetzt, daß die Flüssigkeitsstrahlen nicht gegen die Wand des Düsenrohres 7 prallen. Analog zu dem weiter oben beschriebenen Ausführungsbeispiel hängt die Tropfengröße in guter Näherung allein von der Wegstrecke zwischen den Bohrungen 36 und der Düsenmündung ab.

## Ansprüche

1. Verfahren zum Entfernen von Stickoxid aus einem Rauchgasstrom durch selektive nicht katalytische Reduktion, wobei ein Reagenz, insbesondere Ammoniak, in wäßriger Lösung in Form von Tropfen in den heißen Rauchgasstrom eingebracht wird und die Tropfengröße in Abhängigkeit von der Rauchgastemperatur gewählt wird, dadurch gekennzeichnet, daß die Tropfen mit Trägergasstrahlen in den heißen Rauchgasstrom eingeblasen werden.

2. Verfahren nach Anspruch 1, dadurch gekennzeichnet, daß die Trägergasstrahlen quer zur Strömungsrichtung des Rauchgasstromes eingeblasen werden.

3. Verfahren nach Anspruch 1 oder 2, dadurch gekennzeichnet, daß die Lösung an einer Kante mit einem Trägergasstrahl zusammengeführt und dadurch in Tropfen zerrissen wird, deren Größe durch Änderung der zwischen Flüssigkeit und Trägergasstrahl bestehenden Relativgeschwindigkeit beeinflußbar ist.

4. Verfahren nach Anspruch 1 oder 2, dadurch gekennzeichnet, daß die Lösung in einen Trägergasstrom eingesprüht wird.

5. Feuerungsanlage zur Durchführung des Verfahrens nach Anspruch 3, mit einem Rauchgaskanal und mit Düsen zum Einblasen von Trägergasstrahlen, die mit Reagenz beladen sind, dadurch gekennzeichnet, daß die Düse (1) ein koaxiales, am freien Ende offenes Innenrohr (12) aufweist, das über ein Dosierorgan (26) an eine Zuführleitung (27) für die Reagenzlösung angeschlossen ist und zwischen einer vorgeschobenen Stellung, bei der sein freies Ende bis in die Nähe der Düsenmündung reicht, und einer zurückgezogenen Stellung in Achsrichtung hin und her verschieblich ist.

6. Feuerungsanlage zur Durchführung des Verfahrens nach Anspruch 3, mit einem Rauchgaskanal und mit Düsen zum Einblasen von Trägergasstrahlen, die mit Reagenz beladen sind, dadurch gekennzeichnet, daß die Düse (1) ein koaxiales, am freien Ende offenes Innenrohr (12) aufweist, daß eine erste Zuleitung (25) für die Reagenzlösung axial in das Innenrohr (12) mündet, daß eine zweite Zuleitung (21, 29) für die Reagenzlösung tangential in das Innenrohr (12) mündet und daß die Durchflußmengen beider Zuleitungen unabhängig voneinander dosierbar sind.

7. Feuerungsanlage zur Durchführung des Verfahrens nach Anspruch 3, mit einem Rauchgaskanal und mit Düsen zum Einblasen von Trägergasstrahlen, die mit Reagenz beladen sind, dadurch gekennzeichnet, daß die Düse (1) ein koaxiales, am freien Ende offenes Innenrohr (12) aufweist, das zwischen einer vorgeschobenen Stellung, bei der sein freies Ende bis in die Nähe der Düsenmündung reicht, und einer zurückgezogenen Stellung in Achsrichtung hin und her verschieblich ist, daß eine erste Zuleitung (25) für die Reagenzlösung axial in das Innenrohr (12) mündet, daß eine zweite Zuleitung (21, 29) für die Reagenzlösung tangential in das Innenrohr (12) mündet und daß die Durchflußmengen beider Zuleitungen unabhängig voneinander dosierbar sind.

8. Feuerungsanlage nach einem der Ansprüche 5 bis 7, dadurch gekennzeichnet, daß die Wandstärke des Innenrohres (12) zum freien Ende hin keilartig abnimmt.

9. Feuerungsanlage zur Durchführung des Verfahrens nach Anspruch 4, mit einem Rauchgaskanal und mit Düsen zum Einblasen von Trägergasstrahlen, die mit Reagenz beladen sind, dadurch gekennzeichnet, daß die Düse (1) ein koaxiales, am freien Ende geschlossenes und in der Nähe des freien Endes mit Bohrungen (36) versehenes Innenrohr (34) aufweist, das über ein Dosierorgan (26) an eine Zuführleitung (27) für die Reagenzlösung angeschlossen ist und zwischen einer vorgeschobenen Stellung, bei der sein freies Ende bis in die Nähe der Düsenmündung reicht, und einer zurückgezogenen Stellung in Achsrichtung hin und her verschieblich ist.

Fig. 1

**Fig. 2**

**Fig. 4**

EP 0 337 073 A2

Fig. 3

EP 0 337 073 A2

Fig. 5